# EUROPÄISCHE PATENTSCHRIFT

(11) **EP 2 796 853 B1**
(45) Veröffentlichungstag und Bekanntmachung des Hinweises auf die Patenterteilung: **07.04.2021**
(21) Anmeldenummer: 14001334.3
(22) Anmeldetag: 11.04.2014
(51) Int. Cl.: G01N 15/14, G01N 15/00, G01N 15/10

(54) **Verfahren zum qualitativen und quantitativen Erfassen von größeren Fasern in einer Partikelschüttung und Vorrichtung zum Durchführen des Verfahrens**
Method for the qualitative and quantitative measurement of larger fibres in a particle bed and device for carrying out the said method
Procédé de détection qualitative et quantitative des fibres plus grosses dans un lit de particules et dispositif destiné à l'exécution du procédé

(30) Priorität: 25.04.2013 DE 102013007125
(43) Veröffentlichungstag der Anmeldung: 29.10.2014
(73) Patentinhaber: Fagus-GreCon Greten GmbH & Co. KG, 31061 Alfeld (DE)
(72) Erfinder: Hasener, Jörg, 31061 Alfeld (DE)
(74) Vertreter: Jabbusch, Matthias

(56) Entgegenhaltungen:
- EP-A1- 1 484 118
- WO-A1-01/65237
- WO-A1-85/04249
- WO-A1-90/12310
- WO-A1-2008/134885
- DE-C1- 19 609 045
- US-A1- 2011 264 258
- Heiko Thoemen ET AL: "Edited by Wood-Based Panels An Introduction for Specialists Wood-Based Panels An Introduction for Specialists Edited by Contents", Wood-Based Panels - An Introduction for Specialists, 31. Dezember 2010 (2010-12-31), XP055124820, ISBN: 978-1-90-231682-6 Gefunden im Internet: URL:http://www.ahb.bfh.ch/NR/rdonlyres/638 8C45C-8399-47AA-A833-589576D903BA/0/WoodBa sed_PanelsThoemen_et_alISBN9781902316826.p df [gefunden am 2014-06-23]

## Beschreibung

Die Erfindung betrifft ein Verfahren zum qualitativen und quantitativen Erfassen von größeren Fasern in einer Schüttung für eine Faserverbundwerkstoffplatte, nachdem die Partikelschüttung eine Vorpresse passiert hat. Weiterhin betrifft die Erfindung eine Vorrichtung zum und quantitativen Erfassen von größeren Fasern in einer Partikelschüttung für eine Faserverbundwerkstoffplatte, umfassend eine Vorpresse und eine Transportstrecke für die Partikelschüttung, nachdem die Partikelschüttung eine Vorpresse passiert hat.

Faserverbundwerkstoffplatten sind beispielsweise Holzwerkstoffplatten, in denen Fasern mit Kleber vermischt werden und zu Platten gepresst werden. Die Holzwerkstoffindustrie ist heute dabei eine der am stärksten technologisierten Sparten der Holzindustrie (DUNKY und NIEMZ 2002). Von den Holzwerkstoffherstellern wird ein großes Produktspektrum angeboten, welches von konstruktiven Produkten für das Baugewerbe und die Do-it-Yourself Branche bis hin zu Platten und Formteilen für Möbelhersteller reicht.

Rein ökologisch betrachtet spielen Holzwerkstoffe in Plattenform die größte Rolle: Produziert werden sie entweder auf Spanbasis, wie Spanplatte und Oriented Strand Board (OSB) oder auf Faserbasis mit den jeweiligen Varianten der Faserplatte. Außerdem wird Sperrholz aus Furnieren produziert. 2010 wurden in Europa über 51,1 Mio. m³ Holzwerkstoffe hergestellt, davon 60% Spanplatten, 7 % OSB und knapp 30% Faserplatten. Die Faserplatten wiederum teilten sich auf in 22% mitteldichte Faserplatte (MDF) und 7% Dämmplatten (VHI 2012). Dabei blieben die Produktions- und Verkaufszahlen hinter denen aus den Jahren vor 2008 zurück, in denen die Holzwerkstoffindustrie einen regelrechten Boom erlebt hatte.

Die Holzwerkstoffindustrie hat neben den Absatzschwierigkeiten in den letzten Jahren auch mit der Verknappung ihres wichtigsten Rohstoffes zu kämpfen, die vor allem durch die steigende Nutzung von Holz als günstiger Energieträger verursacht wird. So haben Hersteller von Holzpellets mit Industrierestholz aus Sägewerken und Waldholz mit geringer Dimensionen ähnliche Lieferanten (VHI 2010).

Auch die Konkurrenz der Hersteller untereinander nimmt zu. Fünf große Hersteller teilen sich den europäischen Markt auf und sind damit gleichzeitig die weltweit größten Hersteller.

Im Streit um Marktanteile und Rohstoffe hat in den letzten Jahren vermehrt eine Verlagerung von Produktionskapazitäten auch nach Osteuropa stattgefunden.

Ein weiteres Problem der Hersteller ist, dass ihre Produkte mit einem hohem Technologieaufwand produziert werden müssen, aber eine geringe Wertschöpfung besitzen. Wichtige Teile der Produktion sind kostenintensiv. Zu nennen sind hier z.B. die Pressen oder Zerspannungsanlagen mit hohem Energie- und Investitionsaufwand, die großen Produktionshallen und letztendlich auch die benötigten Rohstoffe. Hinzu kommt die Problematik, dass aus dem bekanntermaßen inhomogenen Rohstoff Holz ein einheitliches Produkt mit dauerhaft hoher Qualität produziert werden muss, das die jeweiligen Industrienormen und eigene Vorgaben der jeweiligen Kunden erfüllen muss (KESSLER 2006). Gemessen an diesem Aufwand sind die erzielbaren Preise jedoch gering. Lösungen für dieses Problem werden im Allgemeinen in der Optimierung der Wirtschaftlichkeit gefunden, etwa indem hohe Stückzahlen mit guter Qualität kontinuierlich produziert werden. Das schlägt sich auch im Output der Produktionsstandorte nieder. Heute neu gebaute Anlagen für Holzwerkstoffe haben Produktionskapazitäten von über 2000 m³ am Tag (DUNKY und NIEMZ 2002).

Um mit hoher Qualität zu produzieren, ist es nötig, das Produkt ständig zu kontrollieren. Produziert man allerdings bei hohem Output, ist eine ständige Kontrolle im (ggf. werkseigenen) Labor abseits der Produktion ungeeignet, da sie nicht zeitnah verfügbar und zudem teuer ist. Bewährter ist eine Prozesskontrolle, die in den Produktstrom integrierte Messstellen besitzt (Inline/Online-Analytik). So werden die gesamte Produktion oder zumindest maßgebliche Teil dauerhaft überwacht und Anlagenparameter sowie Eigenschaften des Rohstoffes und der Platten festgehalten. Auf diese Weise kann auf die Qualität und die Eigenschaften des späteren Produktes geschlossen werden und laufende Produktionsprozesse können besser reguliert werden.

In der Holzindustrie wird zu diesem Zweck auf diverse zerstörungsfreie Messsysteme zurückgegriffen, die entweder auf physikalische Reaktion des Holzes oder des darin enthaltenen Wassers aufbauen.

Zu nennen sind hier Messungen durch Sensoren, die mit Ultraschall- und Mikrowellen, Laser, Röntgen- und Infrarotstrahlen oder auch auf optischer Basis arbeiten. Diese werden für Dichte- und Flächengewichtsmessungen, Überprüfung von Zustand, Feuchtegehalt und Qualität der Rohstoffe und der produzierten Werkstoffe sowie zum Schutz der Produktionseinheiten, wie z.B. dem Stahlband einer kontinuierlichen Presse, verwendet.

Diese Messungen dienen nicht nur der kontinuierlichen Prozesskontrolle, sondern sind auch ein wichtiger Schritt um den Prozess und die Qualität der Produkte mittels statistischer Prozessmodellen vorhersagen zu können (Hasener 2003).

Ein Verfahren und eine Vorrichtung der eingangs genannten Gattung sind in der WO 2008/134885 A1 aufgezeigt. Dokumente WO 85/04249 A1, US 2011/264258 A1 und die Publikation von Heiko Thoemen et al: "An Introduction for Specialists Wood-Based Panels", ISBN: 978-1-90-231682-6 stellen den relevanten Stand der Technik dar. Dokumente WO2008/134885 A1, WO 85/04249 A1 und US 2011/264258 A1 offenbaren ein Verfahren zum qualitativen Erfassen von Fasern in einer Partikelschüttung für eine Faserverbundwerkstoffplatte, diese Dokumente offenbaren jedoch keine Vorpresse.

Der Erfindung liegt die Aufgabe zugrunde, ein eingangs genanntes Verfahren sowie eine eingangs genannte Vorrichtung aufzuzeigen, mit der eine quantitative Erfassung bestimmter Bestandteile in einer Partikelschüttung ermöglicht ist.

Diese Aufgabe ist erfindungsgemäß verfahrensseitig dadurch gelöst, dass die Partikelschüttung eine Vorpresse passiert und danach zumindest ein Bereich der Oberfläche der Partikelschüttung beleuchtet wird und mit einer zweiten Kamera abschnittsweise abgelichtet wird, wobei die aufgenommenen Bilder zu einem Gesamtbild zusammengesetzt werden und anschließend im Gesamtbild die Fasern gezählt werden.

Das erfindungsgemäße Verfahren sowie die erfindungsgemäße Vorrichtung werden durch die Merkmale der unabhängigen Ansprüche definiert. Vorteilhafte Ausgestaltungen ergeben sich aus den Unteransprüchen.

Zur Bestimmung der Fasern kann ein Modellparameter verwendet werden, beispielsweise ein Schwellenwert innerhalb eines Grauwertbildes. Des Weiteren können eine minimale Fasergröße und/oder eine minimale Exzentrizität weitere Parameter sein, um die Bestandteile detaillierter zu bestimmen und zu quantifizieren.

Das erfindungsgemäße Verfahren wird im Umfeld der Partikelschüttung vorgenommen, nämlich an einer Partikelschüttung, die bereits eine Vorpresse passiert hat. Das erfindungsgemäße Verfahren wird somit der Produktion unmittelbar zugeordnet und online an dieser durchgeführt.

Mit dem erfindungsgemäßen Verfahren wird die Oberfläche der Partikelschüttung abschnittsweise betrachtet, dabei dient eine vorzugsweise gleichmäßige Lichtquelle zum hervorragenden Ausleuchten dieses Abschnittes. Mit einer Kamera beispielsweise mit 4096 Pixeln quer zur Produktionsrichtung werden dann Bilder aufgenommen.

In dem Gesamtbild sind bestimmte Partikel gut zu erkennen. Handelt es sich beispielsweise um größere Fasern, so fallen diese Partikel durch eine hellere Färbung auf. Diese Partikel können den Trocknungsprozess mit einem geringeren spezifischen Wärmeeintrag auf die Gesamtoberfläche bezogen durchlaufen als andere Partikel, sie färben sich daher in diesem Wärmeprozess nicht so stark wie andere Partikel. Das gute Erkennen dieser Partikel im aufgenommenen Bild wird verfahrensgemäß dazu benutzt, die Partikel zu bestimmen und zu zählen. Dies erfolgt vorzugsweise durch geeignete Software.

Mit der Software können Korrekturschritte des Bildes vorgenommen werden, gezählte Bestandteile können dann nach einer Weiterbildung der Erfindung in Klassen eingeteilt werden. Bei Fasern können diese Klassen beispielweise anhand der Größe, der Länge oder Breite, der Exzentrizität, des Gradienten an der Faserkante sowie der Umfangslänge eingeteilt werden, anhand der gezählten Werte können Durchschnittswerte, Standardabweichungen und dergleichen bestimmt werden.

Die dabei erhaltenen Messwerte ermöglichen es, auf den Produktionsprozess der Partikelaufbereitung einzuwirken. Stimmen die Werte nämlich nicht mit den Vorgaben überein, sind Korrekturen beispielsweise an der Holzartenmischen oder an dem Vordämper, Kocher oder Refinermöglich. Durch die erstmals objektive Beurteilung der Faserqualität inline ist es erstmals auch möglich, definierte Qualitäten in einem sehr engen Fenster herzustellen und vor allen die entsprechende Refinerenergie zu optimieren.

Das Beleuchten der Partikelschüttung erfolgt vorzugsweise angepasst an die insbesondere farbliche Ausbildung der Partikelschüttung. Handelt es sich um Holzpartikel, kann die Partikelschüttung je nach verwendeter Holzsorte eine voneinander verschiedene Farbe annehmen. Die Helligkeit des Bildes wird angepasst, entsprechende Kameraparameter werden nachgeführt, um den mittleren Grauwert des Bildes konstant zu halten. Die Parameter zur Nachführung des mittleren Grauwertes eines Bildes können dabei wiederum Aufschlüsse über den vorgelagerten Prozessen geben. Nach einer Weiterbildung der Erfindung wird die Veränderung der Helligkeit gemessen.

Diese Messwerte stellen wiederrum Rückschlüsse auf vorgelagerte Prozesse, beispielsweise welche Holzarten verwendet werden und wie Dämpf- und Kochprozesse ablaufen.

Zur Überprüfung der bei dem erfindungsgemäßen Verfahren verwendeten und nachfolgend beschriebenen Vorrichtung sieht eine Weiterbildung des erfindungsgemäßen Verfahrens vor, dass eine Referenzplatte mit bekannter Bestandteilezahl als Kalibriermuster eingesetzt wird. Anhand dieses Musters kann eine Überprüfung oder sogar ein Abgleich der Vorrichtung erfolgen, so dass das erfindungsgemäße Verfahren mit hoher Wiederholgenauigkeit durchführbar ist.

Zur weiteren Ausgestaltung des erfindungsgemäßen Verfahrens kann noch vorgesehen sein, dass Beleuchten der Oberfläche der Partikelschüttung und das Ablichten der Oberfläche der Höhe der Partikelschüttung nachgeführt werden. Dieses Nachführen hält die Abstände von Beleuchtung und Kamera zur Mattenoberfläche jederzeit konstant.

Die vorrichtungsseitige Lösung der Aufgabe ist erfindungsgemäß dadurch gekennzeichnet, dass oberhalb der Partikelschüttung und hinter der Vorpresse zumindest eine Beleuchtungseinrichtung für die Oberfläche der Partikelschüttung angeordnet ist, der zumindest eine mit einer Auswerteeinrichtung verschaltete Zeilenkamera zugeordnet ist, wobei die Auswerteeinrichtung zum quantitativen Erfassen von größeren Fasern in einer Partikelschüttung für eine Faserverbundwerkstoffplatte eingerichtet ist.

Die erfindungsgemäße Vorrichtung arbeitet mit einer Kamera, mit der Hersteller von MDF ein Qualitätskontrollsystem zur Überprüfung der Fasergüte in einer kontinuierlichen Produktion erhalten.

Die Vorrichtung besteht aus der Kamera und einem auswertenden Computer. Die Kamera ist in einem Gehäuse vorzugsweise in einem Haltegestell über dem Band vor oder nach der Heißpresse befestigt. Der Computer ist mit einem Bildverarbeitungsprogramm ausgestattet. Zur kompletten Belichtung der Partikelschüttung sind innerhalb des Gehäuses beispielhaft mehrere Leuchtstofflampen angebracht. Alle beispielsweise ein bis drei Sekunden nimmt die Kamera ein Bild von der Partikelschüttung mit 2048 x 4096 Pixeln in Graustufen auf, das dann im angeschlossenen Computer ausgewertet wird. Die wiederholbare Pixelanzahl in Vorschubrichtung des Bildes gewährleistet, dass Fasern exakt vermessen werden können und jeweils auf die konstante Mattenoberfläche bezogen werden kann.

Um Bestandteile auf jedem Foto erkennen zu können, durchläuft das entstandene Bild mehrere Verarbeitungsschritte, so eliminiert ein Verarbeitungsschritt verschiedene Streifen und Helligkeitsunterschiede, die sich in Abhängigkeit der Installationsbedingungen über das Originalbild legen können.

Nach einer Weiterbildung der erfindungsgemäßen Vorrichtung ist vorgesehen, dass die Beleuchtungseinrichtung und die Kamera an dem Haltegestell höhenveränderbar gehalten sind. Die verarbeiteten Partikelschüttungen haben voneinander verschiedene Dicken, der Abstand von Beleuchtungseinrichtung und Kamera zur Oberfläche der Schüttung ist jedoch jeweils gleich zu halten. Die Oberfläche der Partikelschüttung soll in der Focusebene der Kamera liegen. Daher ist eine Höhenverstellung von Beleuchtungseinrichtung und Kamera notwendig.

Das Gehäuse für das Sehfeld der Kamera ist vorzugsweise mit einem Druckluftanschluss ausgerüstet. In das Gehäuse kann auf diese Weise eine Luftströmung eingeführt werden, welche das Innenleben des Gehäuses stets sauber hält und auch verhindert, dass sich Partikel auf die Oberfläche der Kameraoptik legen.

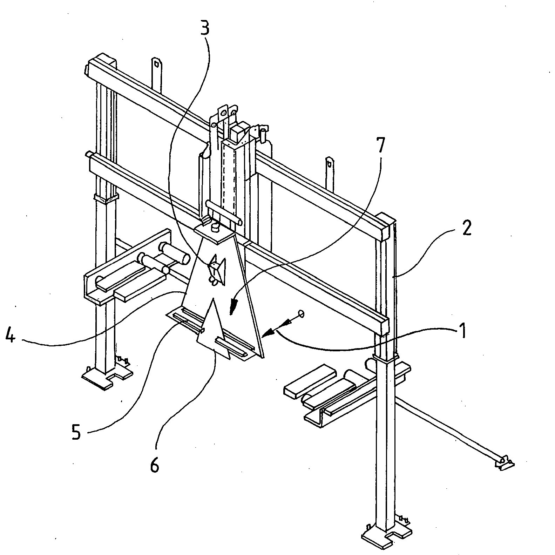

Ein Ausführungsbeispiel der Erfindung, aus dem sich weitere erfinderische Merkmale ergeben, ist in der Zeichnung dargestellt.

Die einzige Figur der Zeichnung zeigt eine perspektivische Ansicht einer Vorrichtung zum quantitativen Erfassen bestimmter Bestandteile in einer Partikelschüttung.

In der Figur ist die Partikelschüttung durch einen Pfeil 1 verdeutlicht. Sie wird unterhalb eines Haltegestells 2 hindurchgeführt, das Haltegestell 2 trägt dabei eine Zeilenkamera 3.

Die Zeilenkamera 3 ist an dem Haltegestell 2 mit einem Gehäuse 4 höhenveränderbar angeordnet. Das Gehäuse 4 trägt dabei eine Beleuchtungseinrichtung 7 mit vier Leuchtstoffröhren 5.

Die Figur zeigt das Gehäuse 4 einseitig offen, damit das fächerförmige Sehfeld 6 der Kamera 3 darstellbar ist. Das Gehäuse 4 ist ein geschlossenes Gehäuse 4, es hat zwischen den Leuchtstoffröhren 5 lediglich einen Schlitz zum Austritt des Sehfeldes 6 der Zeilenkamera 3. Das Gehäuse 4 kann auf Höhe der Partikelschüttung eine Breite von 400 bis 600 mm haben, diese Breite kann dann auch das Sehfeld 6 einnehmen.

## Patentansprüche

1. Verfahren zum qualitativen und quantitativen Erfassen von größeren Fasern in einer Partikelschüttung für eine Faserverbundwerkstoffplatte, nachdem die Partikelschüttung eine Vorpresse passiert hat, wobei die Partikelschüttung eine Vorpresse passiert und danach zumindest ein Bereich der Oberfläche der Partikelschüttung beleuchtet wird und mit einer Zeilenkamera (3) abschnittsweise abgelichtet wird, wobei die aufgenommenen Bilder zu einem Gesamtbild zusammengesetzt werden und anschließend im Gesamtbild die größeren Fasern gezählt werden.

2. Verfahren nach Anspruch 1, **dadurch gekennzeichnet, dass** die gezählten Fasern anhand physikalischer Parameter klassifiziert werden.

3. Verfahren nach Anspruch 1 oder 2, **dadurch gekennzeichnet, dass** die Helligkeit des aufgenommenen Bildes an die insbesondere farbliche Ausbildung der Partikelschüttung angepasst und innerhalb eines Toleranzfensters konstant gehalten wird.

4. Verfahren nach Anspruch 3, **dadurch gekennzeichnet, dass** die Veränderung der Helligkeit gemessen wird.

5. Verfahren nach einem der vorhergehenden Ansprüche, **dadurch gekennzeichnet, dass** ein Plattenmuster mit definierten Objekten und bekannter Bestandteilezahl als Kalibriermuster eingesetzt wird.

6. Verfahren nach einem der vorhergehenden Ansprüche, **dadurch gekennzeichnet, dass** das Beleuchten der Oberfläche der Partikelschüttung und das Ablichten der Oberfläche der Höhe der Partikelschüttung nachgeführt werden.

7. Verfahren nach einem der vorhergehenden Ansprüche, **dadurch gekennzeichnet, dass** Informationen aus dem Gesamtbild an Steuerungen für vorgelagerte Prozesse gesendet werden.

8. Vorrichtung zum quantitativen Erfassen von größeren Fasern in einer Partikelschüttung für eine Faserverbundwerkstoffplatte, umfassend eine Vorpresse und eine Transportstrecke für die Partikelschüttung, nachdem die Partikelschüttung eine Vorpresse passiert hat, wobei oberhalb der Partikelschüttung und hinter der Vorpresse zumindest eine Beleuchtungseinrichtung (7) für die Oberfläche der Partikelschüttung angeordnet ist, der zumindest eine mit einer Auswerteeinrichtung verschaltete Zeilenkamera (3) zugeordnet ist, wobei die Auswerteeinrichtung zum quantitativen Erfassen von größeren Fasern in eine Partikelschüttung für eine Faserverbundwerkstoffplatte eingerichtete ist.

9. Vorrichtung nach Anspruch 8, **dadurch gekennzeichnet, dass** für Beleuchtungseinrichtung (7) und Zeilenkamera (3) ein Haltegestell (2) vorgesehen ist, an dem die Beleuchtungseinrichtung (7) und die Zeilenkamera (3) höhenveränderbar gehalten sind.

10. Vorrichtung nach Anspruch 8 oder 9, **dadurch gekennzeichnet, dass** das Sehfeld (6) der Zeilenkamera (3) mit einem Gehäuse (4) eingefasst ist.

11. Vorrichtung nach Anspruch 10, **dadurch gekennzeichnet, dass** das Gehäuse (4) im Bereich der Zeilenkamera (3) einen Druckluftanschluss hat.

12. Vorrichtung nach einem der Ansprüche 8 bis 11, **dadurch gekennzeichnet, dass** die Beleuchtungseinrichtung (7) Leuchtstoffröhren (5) enthält.

## Claims

1. A method for the qualitative and quantitative measurement of larger fibres in a particle bed for a fibre-reinforced composite board once the particle bed has passed through a prepress,
wherein the particle bed passes through a prepress and then at least one region of the surface of the particle bed is illuminated and is photographed in some areas by a line scan camera (3), wherein the recorded images are combined to form an overall image and the larger fibres in the overall image are then counted.

2. The method according to claim 1, **characterised in that** the counted fibres are classified on the basis of physical parameters.

3. The method according to claim 1 or 2, **characterised in that** the brightness of the recorded image is adjusted in particular in accordance with the colour of the particle bed and is kept constant within a tolerance window.

4. The method according to claim 3, **characterised in that** the change in brightness is measured.

5. The method according to one of the preceding claims, **characterised in that** a board pattern with defined objects and known number of components is used as a calibration pattern.

6. The method according to one of the preceding claims, **characterised in that** the illumination of the surface of the particle bed and the photographing of the surface are adjusted to the height of the particle bed.

7. The method according to one of the preceding claims, **characterised in that** information from the overall image is sent to controllers for upstream processes.

8. A device for quantitatively measuring larger fibres in a particle bed for a fibre-reinforced composite board, comprising a prepress and a transport path for the particle bed once the particle bed has passed a prepress, wherein
at least one lighting means (7) for illuminating the surface of the particle bed is arranged above the particle bed and after the prepress and is assigned at least one line scan camera (3) connected to an evaluation means, wherein the evaluation means is designed for the quantitative measurement of larger fibres in a particle bed for a fibre-reinforced composite board.

9. The device according to claim 8, **characterised in that** a holding frame (2) is provided for the lighting means (7) and line scan camera (3), said lighting means (7) and line scan camera (3) being held height-adjustably on the holding frame.

10. The device according to claim 8 or 9, **characterised in that** the field of vision (6) of the line scan camera (3) is surrounded by a housing (4).

11. The device according to claim 10, **characterised in that** the housing (4) has a compressed air connection in the region of the line scan camera (3).

12. The device according to one of claims 8 to 11, **characterised in that** the lighting means (7) contains fluorescent tubes (5).

## Revendications

1. Procédé de détection qualitative et quantitative de fibres de plus grande taille dans des particules en vrac destinées à un panneau composite renforcé par fibres, une fois que les particules en vrac ont traversé une prépresse,
les particules en vrac traversant une prépresse et ensuite au moins une zone de la surface des particules en vrac étant éclairée et balayée par sections à l'aide d'une caméra de balayage linéaire (3), les prises de vue enregistrées étant rassemblées en une vue d'ensemble et les fibres de plus grande taille étant ensuite comptées dans la vue d'ensemble.

2. Procédé selon la revendication 1, **caractérisé en ce que** les fibres comptées sont classifiées à l'aide de paramètres physiques.

3. Procédé selon la revendication 1 ou 2, **caractérisé en ce que** la luminosité de la prise de vue enregistrée est adaptée notamment à la conformation colorée des particules en vrac et gardée constante dans une fenêtre de tolérances.

4. Procédé selon la revendication 3, **caractérisé en ce que** le changement de luminosité est mesuré.

5. Procédé selon l'une quelconque des revendications précédentes, **caractérisé en ce qu'**on utilise comme grille de calibration un échantillon de panneau avec des objets définis et un nombre connu de composants.

6. Procédé selon l'une quelconque des revendications précédentes, **caractérisé en ce que** l'éclairage de la surface des particules en vrac et le balayage de la surface de la hauteur des particules en vrac sont tracés.

7. Procédé selon l'une quelconque des revendications précédentes, **caractérisé en ce que** des informations provenant de la vue d'ensemble sont envoyées à des systèmes de commandes pour des processus précédents.

8. Dispositif de détection qualitative et quantitative de fibres de plus grande taille dans des particules en vrac destinées à un panneau composite renforcé par fibres, comprenant une prépresse et un trajet de transport pour les particules en vrac, une fois que les particules en vrac ont traversé une prépresse,
au-dessus des particules en vrac derrière la prépresse étant placé au moins un système d'éclairage (7) pour la surface des particules en vrac, auquel est associée au moins une caméra de balayage linéaire (3) connectée avec un système d'évaluation, le système d'évaluation étant aménagé pour détecter les fibres de plus grande taille dans des particules en vrac destinées à un panneau composite renforcé par fibres.

9. Dispositif selon la revendication 8, **caractérisé en ce que** pour le système d'éclairage (7) et la caméra de balayage linéaire (3), il est prévu un bâti de maintien (2) sur lequel le système d'éclairage (7) et la caméra de balayage linéaire (3) sont maintenues en étant réglables en hauteur.

10. Dispositif selon la revendication 8 ou 9, **caractérisé en ce que** le champ de vision (6) de la caméra de balayage linéaire (3) est encadré par un boîtier (4).

11. Dispositif selon la revendication 10, **caractérisé en ce que** dans la zone de la caméra de balayage linéaire (3), le boîtier (4) dispose d'un branchement sur l'air comprimé.

12. Dispositif selon l'une quelconque des revendications 8 à 11, **caractérisé en ce que** le système d'éclairage (7) contient des tubes fluorescents (5).
